# FASCICULE DE BREVET EUROPEEN

(11) **EP 1 039 219 B1**
(45) Date de publication et mention de la délivrance du brevet: **06.05.2004**
(21) Numéro de dépôt: 00420038.2
(22) Date de dépôt: 18.02.2000
(51) Int. Cl.: F23D 14/18, F23D 14/66

(54) **Dispositif de combustion catalytique émettant un rayonnement infrarouge**
Katalytische Infrarotverbrennungsvorrichtung
Infra-red catalytic combustion device

(30) Priorité: 25.03.1999 FR 9903905
(43) Date de publication de la demande: 27.09.2000
(73) Titulaire: Sunkiss, 69580 Sathonay Camp (FR)
(72) Inventeur: Charmes, Michel M., 69370 St. Didier au Mont d'Or (FR); Rogemond, Eric M., 38290 Satolas & Bonce (FR)
(74) Mandataire: Guerre, Dominique

(56) Documents cités:
- DE-A- 1 401 165
- GB-A- 2 096 483
- US-A- 3 155 142
- US-A- 3 291 187
- PATENT ABSTRACTS OF JAPAN vol. 009, no. 100 (M-376), 2 mai 1985 (1985-05-02) & JP 59 225211 A (MATSUSHITA DENKI SANGYO KK), 18 décembre 1984 (1984-12-18)
- PATENT ABSTRACTS OF JAPAN vol. 008, no. 160 (M-312), 25 juillet 1984 (1984-07-25) & JP 59 056019 A (MATSUSHITA DENKI SANGYO KK), 31 mars 1984 (1984-03-31)
- PATENT ABSTRACTS OF JAPAN vol. 007, no. 163 (M-229), 16 juillet 1983 (1983-07-16) & JP 58 069312 A (MATSUSHITA DENKI SANGYO KK), 25 avril 1983 (1983-04-25)
- PATENT ABSTRACTS OF JAPAN vol. 007, no. 257 (M-256), 16 novembre 1983 (1983-11-16) & JP 58 140511 A (MATSUSHITA DENKI SANGYO KK), 20 août 1983 (1983-08-20)

## Description

La présente invention concerne un dispositif d'émission surfacique d'un rayonnement infrarouge, avec combustion catalytique d'un mélange d'un gaz combustible (hydrocarbure gazeux tel que butane ou gaz naturel) avec un gaz comburant, air par exemple, surpressé ou comprimé, ou non.

Un tel dispositif peut être mis en oeuvre de manière unitaire, ou de manière groupée ou assemblée avec d'autres dispositifs, par exemple four ou tunnel de séchage, ou dans diverses applications, par exemple séchage, polymérisation d'un revêtement, etc...

Par "émission surfacique", on entend une surface émettant en tout point un rayonnement infrarouge, compris entre 2 µm et 10 µm, avec une puissance d'émission calorifique distribuée de manière homogène et régulière selon toute la surface émettrice. Préférentiellement, cette surface est plane, par exemple avec un contour polygonal, notamment rectangulaire. Mais une telle surface peut être convexe ou concave.

Conformément au document US-A-3 291 187, on connaît déjà un dispositif d'émission surfacique d'un rayonnement infrarouge, comprenant un foyer de combustion comportant une paroi de combustion catalytique, ayant une certaine épaisseur, en matériau réfractaire, perméable selon son épaisseur, et adaptée, par exemple en termes de perte de charge, pour le passage d'un mélange à brûler. Ce dernier, comme dans tout brûleur, consiste en un mélange d'un gaz combustible, par exemple hydrocarbure gazeux, tel que butane ou gaz naturel, et d'un gaz comburant, par exemple air atmosphérique, ledit mélange étant comprimé ou non. Un diffuseur du mélange à brûler est éventuellement disposé en amont de la paroi d'échange thermique, afin d'homogénéiser le mélange à brûler, avant qu'il atteigne la face amont de ladite paroi de combustion catalytique. Le passage du mélange à brûler s'effectue de la face amont à la face aval de la paroi de combustion catalytique, dont la surface développée interne est revêtue par une matière catalytique de combustion, par exemple un ou plusieurs métaux ou oxydes métalliques ayant la propriété de catalyser l'oxydation des hydrocarbures, par exemple platine et/ou palladium. Ce foyer de combustion catalytique comprend une chambre amont, dans laquelle est éventuellement disposé le diffuseur, alimentée d'un côté en mélange à brûler, et fermée de l'autre côté par la paroi de combustion catalytique.

Pour des dispositifs tels que décrits précédemment, dont la surface d'émission infrarouge correspondant à la face aval de la paroi de combustion catalytique, est relativement importante, deux difficultés sont en pratique rencontrées.

La première concerne le contrôle de la puissance calorifique émise par la paroi de combustion catalytique, en modulant la pression du gaz combustible. En pratique, pour une pression minimum dudit gaz, correspondant à une puissance minimum émise, si la perte de charge générée par le passage du mélange à brûler au travers de la paroi de combustion catalytique est trop faible, la surface interne développée de cette même paroi se refroidit beaucoup trop, ce qui dans certains cas conduit à une désactivation de la matière catalytique. En pareil cas, il faut alors procéder à un réamorçage de la combustion catalytique, pour ramener la paroi de combustion catalytique à sa puissance nominale d'émission.

La seconde difficulté concerne le maintien en tous points de la surface d'émission du rayonnement infrarouge, d'une température suffisamment importante pour maintenir la matière catalytique activée, et donc obtenir une combustion catalytique uniformément repartie sur toute la surface précitée, sans "zone morte", c'est à dire inactive en termes de combustion.

La présente invention a pour objet de remédier aux inconvénients précités.

Plus précisément, l'invention a pour objet une solution particulièrement (mais non exclusivement) adaptée aux dispositifs présentant une surface relativement importante de rayonnement infrarouge, permettant de limiter ou d'empêcher l'inactivation de la matière catalytique, d'une part localement, et d'autre part lorsque le dispositif travaille à sa puissance minimum, lorsque cette dernière est contrôlée ou régulée.

Conformément à la présente invention, le foyer de combustion comprend au moins un échangeur thermique, disposé en amont et transversalement en vis-à-vis de la paroi de catalytique. Cet échangeur thermique est constitué par un matériau réfractaire, par exemple une céramique, et est perméable, à l'instar de la paroi de combustion catalytique, selon son épaisseur, en étant adapté (par exemple en termes de perte de charge) pour le passage du mélange à brûler. Cet échangeur thermique forme avec la paroi de combustion catalytique un interstice intercalaire, séparé par l'échangeur thermique du reste de ou de la chambre amont. Cet échangeur thermique reçoit par sa face aval directement en vis-à-vis de la paroi de combustion catalytique, principalement par rayonnement, au moins une majeure partie de la chaleur rayonnée par la face amont de la paroi de combustion catalytique.

Préférentiellement, le foyer de combustion comprend un diffuseur du mélange à brûler, disposé, par exemple dans la chambre amont, en amont de l'échangeur thermique.

Selon la présente invention, par "échangeur thermique", on entend donc un élément tel que défini précédemment, dans lequel ne s'effectue aucune combustion catalytique, pouvant selon le mode de réalisation retenu être assimilé à une paroi perméable ayant une certaine épaisseur, traversée par le mélange à brûler selon toute sa section transversale utile. Cet échangeur a pour fonction première de capter au moins une partie de la chaleur émise par la face amont de la paroi de combustion catalytique, et de la restituer au moins en partie au mélange à brûler le traversant, immédiatement avant qu'il atteigne la face amont de la paroi de combustion catalytique.

De manière à avoir un échange thermique effectif, l'échangeur thermique en question est dimensionné en termes d'épaisseur (c'est-à-dire de longueur selon la direction de circulation du mélange à brûler) en sorte que le temps de séjour du mélange à brûler au sein dudit échangeur soit au moins égal à 0,1 s. Si l'épaisseur de l'échangeur thermique est trop faible, au point que le temps de séjour du mélange à brûler est inférieur à 0,1 s, on assiste, d'une part à un échauffement de la face amont de l'échangeur thermique, à puissance calorifique relativement élevée, ce qui peut poser un problème de sécurité, et d'autre part, on constate un refroidissement de la face amont de la paroi de combustion catalytique, à puissance calorifique relativement faible, ce qui peut inhiber la réaction catalytique.

En pratique, un tel échangeur thermique permet d'augmenter effectivement la température du mélange à brûler, de la face amont (où ledit mélange est à une température proche de la température ambiante) à la face aval (où ledit mélange est à une température proche de celle de la paroi de combustion catalytique) dudit échangeur thermique. Cette augmentation de température est au moins égale à 500° C, et préférentiellement comprise entre 500 et 1000 °C.

En pratique, le matériau réfractaire utilisé pour l'échangeur thermique doit assurer dans sa masse une certaine conduction des calories captées par rayonnement par la face aval dudit échangeur. Cette conduction doit demeurer cependant limitée, de manière à ne pas porter le mélange à brûler à une température d'inflammation, avant qu'il n'atteigne la paroi de combustion catalytique. Avantageusement, le matériau constitutif de l'échangeur thermique est une céramique, par exemple cordiérite. L'épaisseur de l'échangeur thermique, c'est-à-dire sa dimension selon la direction de passage ou circulation du mélange à brûler, est au moins égale à 5 cm.

La perte de charge générée par le passage du mélange à brûler dans l'échangeur thermique, ne doit pas être trop importante. Elle est en général du même ordre que celle générée par le passage du mélange à brûler dans la paroi de combustion catalytique, par exemple de l'ordre de 0,60 Pa.

Selon la présente invention, il existe un interstice fonctionnel vide de tout matériau, entre l'échangeur thermique et la paroi de combustion catalytique, et plus précisément entre la face aval de l'échangeur thermique et la face amont de la paroi de combustion catalytique. Préférentiellement, cet interstice fonctionnel est au plus égal à 5 mm, et compris entre 4 et 6 mm, de manière à situer la face aval de l'échangeur thermique, en vue directe de la face amont de la paroi de combustion, et dans la zone de rayonnement maximum de cette dernière.

Par conséquent, un échangeur thermique selon la présente invention ne saurait être confondu avec un diffuseur ou écran thermique, d'une part parce qu'un tel diffuseur ou écran thermique peut exister selon la présente invention, en plus et en amont de l'échangeur thermique, et d'autre part, parce qu'en général un diffuseur ou écran thermique, souvent relativement mince, n'a pratiquement aucun rôle de transfert de calories vers le gaz ou le mélange gazeux qui le traverse.

Grâce à l'invention, de plus, l'énergie thermique de la combustion, non rayonnée par la face aval de la paroi de combustion catalytique, se trouve arrêtée pour une partie importante par l'échangeur thermique, et retournée vers la paroi de combustion catalytique, par l'intermédiaire du mélange à brûler, servant de milieu de transfert thermique. Ainsi, on évite de dissiper vers l'amont du dispositif, par rapport au sens de circulation du mélange à brûler, une partie importante de la chaleur non rayonnée à l'extérieur du même dispositif.

Préférentiellement, le foyer de combustion comprend une paroi complémentaire d'isolation thermique, disposée en amont et en vis-à-vis de la face amont de l'échangeur thermique, cette paroi d'isolation thermique, elle aussi en matériau réfractaire, étant également perméable selon son épaisseur, et adaptée pour le passage du mélange à brûler.

Cette disposition augmente l'isolation thermique relative entre, d'un côté la paroi de combustion catalytique, et de l'autre côté l'amont du dispositif, en évitant ou limitant le phénomène de prise de feu dans la chambre amont dans laquelle circule le mélange à brûler.

Préférentiellement, le foyer de combustion comprend une chambre de distribution du mélange à brûler, en amont de la chambre dite amont comme précédemment, selon le sens de circulation du mélange à brûler. Cette chambre de distribution est séparée de la chambre amont par une cloison dans laquelle sont distribués une multiplicité de passages de détente du mélange à brûler.

Cette disposition permet en particulier d'obtenir une oxydation ou combustion stoechiométrique, selon pratiquement toute la surface de la face aval de la paroi de combustion catalytique, nonobstant l'importance de cette dernière.

La présente invention est maintenant décrite par référence au dessin annexé, dans lequel :
- la figure 1 représente, de manière schématique un dispositif conforme à la présente invention, selon un premier mode d'exécution ;
- les figures 2 et 3 représentent respectivement deux autres modes d'exécution de la présente invention, toujours de manière schématique.

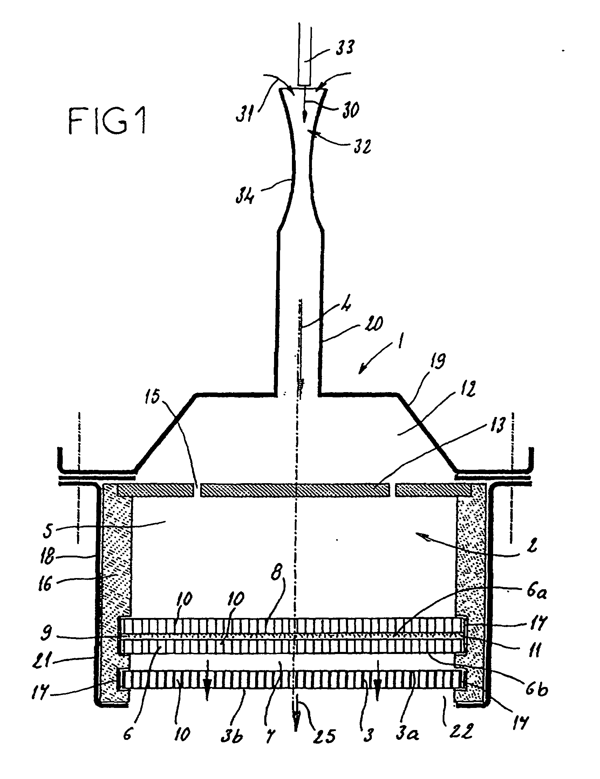

Conformément à la figure 1, un dispositif 1 d'émission surfacique d'un rayonnement infrarouge, comprend pour l'essentiel un foyer 2 de combustion catalytique, un moyen 32 de formation ou obtention du mélange à brûler, et un boîtier 21 dans lequel le foyer de combustion 2 est disposé au moins pour partie.

Le foyer de combustion 2 est organisé et construit autour de trois parois, 3, 6 et 8, identiques ou non, ayant par exemple une forme rectangulaire, en matériau réfractaire, perméables selon leur épaisseur, et adaptées chacune pour le passage selon toute leur section utile du mélange à brûler 4, de leur face amont à leur face aval, selon le sens de circulation dudit mélange à brûler. Ces trois parois, 3,6 et 8, sont constituées chacune par une galette de matériau céramique réfractaire, par exemple en cordiérite, traversée de sa face amont à sa face aval, toujours selon le sens de passage du mélange à brûler 4, par une multiplicité de canaux 10 parallèles ; à titre d'exemple, il s'agit d'une galette en matériau du type "nid d'abeille", tel que vendu par différents fabricants, comme CORNING sous la dénomination CELCOR®, et utilisé par exemple dans les pots de combustion catalytique de gaz d'échappement de moteurs thermiques.

De l'amont vers l'aval, par rapport au sens de circulation du mélange à brûler 4, ces parois sont successivement :
- une paroi 3 de combustion catalytique du mélange à brûler 4, dont la surface développée interne est revêtue par une matière catalytique de combustion, par exemple un dépôt en mélange de platine et de palladium, sur le matériau réfractaire de ladite paroi 3 de combustion catalytique, par l'intermédiaire ou non d'une couche ou revêtement d'un autre matériau minéral à grande surface développée, par exemple en alumine.
- une paroi constituant en elle-même un échangeur thermique 6, disposée en amont et en vis à vis de la paroi 3 de combustion catalytique
- et une paroi 8 d'isolation thermique, disposée à distance, en amont et en vis à vis de la paroi d'échange thermique 6.

Ces trois parois, 3, 6 et 8, superposées et alignées selon l'axe 4 du dispositif, sont montées transversalement 2 par rapport audit foyer, et précisément par rapport à sa chemise intérieure 16, réfractaire et isolante, par l'intermédiaire d'un joint d'étanchéité 17, entre la tranche périphérique de chaque paroi ou galette 3, 6 ou 8, et ladite chemise 16.

Le moyen 32 de formation ou obtention du mélange à brûler 4 comprend de manière traditionnelle, à titre d'exemple :
- un injecteur 33 d'un gaz combustible sous pression permettant d'obtenir un jet 30 dudit gaz combustible ;
- un organe 34 de type venturi, permettant d'admixer l'air atmosphérique 31 au jet 30 de gaz combustible, pour obtenir le mélange à brûler 4, amené par un conduit 20 dans la chambre de distribution 12 décrite ci-après.

Le foyer de combustion 2 est disposé au moins pour partie, sinon en totalité, dans un boîtier 21, ménageant au moins une fenêtre 22 au regard de la face aval 3b de la paroi 3 de combustion catalytique, au travers de laquelle le rayonnement infrarouge est émis à partir de la face aval 3b de la paroi 3.

Le boîtier 21 comprend un corps 18 fermé par un couvercle 19, monté en regard d'une cloison 13, parallèle aux parois 6, 8 et 10, elles-mêmes parallèles entre elles. Une multiplicité de passages 15 de détente du mélange à brûler 4 sont disposés dans cette cloison 13, séparant d'un côté, c'est à dire du côté amont, une chambre 12 de distribution du mélange à brûler 4, et de l'autre côté, c'est à dire du côté aval, une chambre dite amont 5, par rapport à la paroi 3 de combustion catalytique, toujours selon le sens de circulation du mélange à brûler 4.

La chambre amont 5 est alimentée d'un côté, à partir de la cloison 13 de détente, en mélange à brûler, et est fermée de l'autre côté par la paroi 3 de combustion catalytique.

La paroi 6 constitue à elle seule un échangeur thermique selon l'invention, répondant à la totalité des caractéristiques techniques précédemment exposées dans le préambule'de la présente description.

L'échangeur thermique 6, disposé en amont et en vis à vis de la paroi 3 de combustion catalytique, reçoit en fonctionnement par sa face aval 6b au moins la majeure partie de la chaleur rayonnée par la face amont 3a de la paroi 3 de combustion catalytique, au travers de laquelle circule le mélange à brûler, et au sein de laquelle s'effectue la combustion catalytique dudit mélange. Cet échangeur thermique 6 est disposé seulement dans la chambre amont 5, et détermine avec la paroi 3 de combustion catalytique un interstice 7 intercalaire, séparé du reste de la chambre amont 5 par ledit échangeur thermique 6.

La paroi d'isolation thermique 8 est disposée en amont et en vis à vis de l'échangeur thermique 6, toujours transversalement dans la chambre amont 5, pour déterminer avec l'échangeur 6 un interstice intermédiaire 9, séparé du reste de la chambre amont 5 par cette paroi d'isolation thermique 8. Un diffuseur 11 du mélange à brûler 4 est disposé transversalement dans l'interstice intermédiaire 9. Ce diffuseur comprend une feuille perméable au mélange à brûler, en matériau réfractaire, par exemple papier ou mousse céramique.

La paroi d'isolation thermique 8 et le diffuseur 11 peuvent être un seul et même composant, par exemple une paroi en mousse céramique, accolée ou non à la face amont de l'échangeur thermique 6.

Comme le montre bien la figure 1, la face aval de l'échangeur thermique 6 a pratiquement la même surface que la face amont 3b, rayonnante, de la paroi 3 de combustion catalytique, c'est à dire que la surface utile de cette dernière.

La paroi 6 constituant l'échangeur thermique a le cas échéant une épaisseur supérieure à celle des parois 3 et 8, en fonction du degré de réchauffement recherché pour le mélange à brûler, avant sa combustion ou oxydation catalytique.

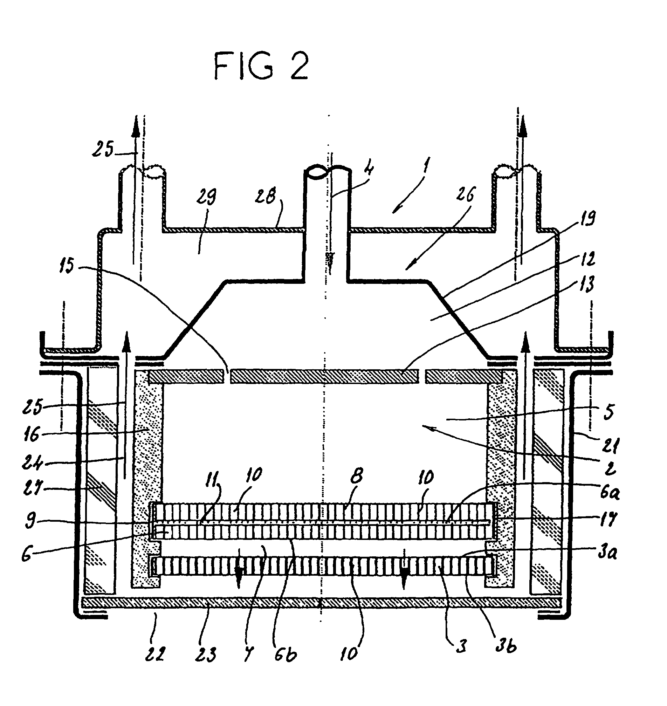

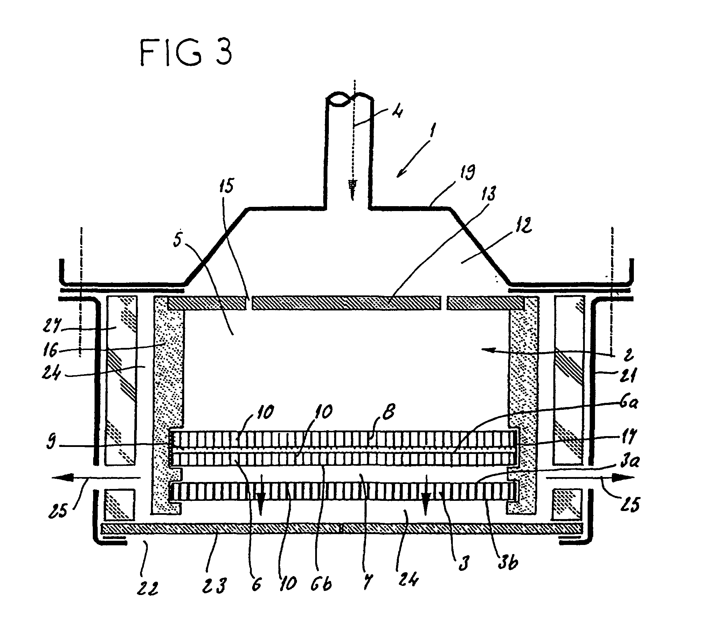

Conformément aux figures 2 et 3, le dispositif 1 d'émission surfacique d'un rayonnement infrarouge, se distingue du dispositif décrit par référence à la figure 1, en ce que une vitre 23 en matériau céramique et transparent ferme, de manière étanche, la fenêtre 22 du boîtier 21, au regard de la face aval 3b de la paroi 3 de combustion catalytique. Ce boîtier 21 avec sa fenêtre fermée par la vitre 23 ménage avec le foyer de combustion 2 un circuit 24 d'évacuation des gaz brûlés, sortant par la face aval 3b de la paroi 3 de combustion catalytique.

Conformément au mode d'exécution de la figure 2, le boîtier 21 comporte un chemisage extérieur 27, en matériau isolant et réfractaire, ménageant avec la chemise 16 du foyer de combustion 2, un interstice annulaire dans lequel les gaz brûlés 25 circulent à contre courant du sens de passage du mélange à brûler 4.

Un carter 28 est superposé au boîtier 21, en ménageant une chambre 29 de collection des gaz brûlés 25, en étant espacé du capot 19. Dans cette chambre de collection 29, les gaz brûlés 25 échangent leur chaleur avec le mélange à brûler 4, introduit dans la chambre de distribution 12.

Conformément au mode d'exécution de la figure 3, et par différence avec celui de la figure 2, il n'y a plus d'échange de chaleur entre les gaz brûlés 25 et le mélange à brûler 4.

Le circuit 24 d'évacuation des gaz brûlés est agencé pour évacuer ces derniers transversalement par rapport à la direction de passage du mélange à brûler 4, à travers un passage dans le chemisage réfractaire 27, communiquant d'un côté avec l'interstice annulaire 24 entre chemise 16 et chemisage 27, et l'extérieur.

Pour démontrer l'efficacité d'un dispositif selon l'invention, par rapport à un dispositif traditionnel, on a effectué deux séries d'essais comparatifs entre, d'une part un dispositif selon la figure 1, sans échangeur thermique 6, et d'autre part le même dispositif avec un échangeur thermique 6.

Dans l'un et l'autre cas, les dimensionnements utilisés et conditions expérimentales sont les suivants.

La paroi d'échange thermique 6, la paroi de combustion catalytique 3, et la paroi d'isolation thermique sont obtenues chacune par découpe d'une galette dans un élément monolithe du type "nid d'abeille" en cordiérite, tel que vendu par la Société CORNING sous la marque CELCOR®. La section utile de chaque galette est de 225 cm², correspond à 14000 alvéoles ayant chacune une section unitaire de 1 mm².

Le diffuseur 11 est constitué par une galette en mousse de céramique ayant une épaisseur de 13 mm.

L'échangeur thermique 6 (paroi d'échange thermique) a une épaisseur de 50 mm, et autorise un temps de séjour en son sein du mélange à brûler, de 0,16 seconde.

Le débit d'air (gaz comburant) est variable en fonction du débit de gaz combustible, lui-même modulé pour contrôler la puissance calorifique émise. L'air étant à 20°C, le débit d'air est variable et compris entre 10 et 16 m³/h.

La réaction catalytique est initiée par une flamme nue, obtenue par étincelage entre deux électrodes, dans l'interstice de 5 mm entre les parois 6 et 3, avec un mélange à brûler stoechiométrique.

Les températures sont enregistrées en continu, notamment sur les face amont et aval du diffuseur 11, et celles de l'échangeur 6.

Les fumées de combustion sont analysées en continu, quant à leur teneur en méthane, monoxyde de carbone, oxygène, et gaz carbonique.

Le débit de gaz combustible est modulé en agissant sur sa pression, dans la gamme de réglage suivant :
- une pression de 50 mbars (500 Pa) correspond à une puissance surfacique minimum de 60 kW/m² ;
- une pression de 140 mbars (1400 Pa) correspond à une puissance surfacique maximum de 100 kW/m².

Pour une puissance surfacique minimum (60 kW/m²), le fonctionnement sans échangeur thermique 6 n'est pas possible avec un débit d'air pulsé de 14 m³/h. En effet, le mélange à brûler n'est pas suffisamment chaud pour entretenir une température minimum et suffisante pour oxyder catalytiquement la totalité du gaz combustible. Il en résulte une désactivation progressive et inéluctable de la matière catalytique (analyse dans les fumées d'une quantité croissante de CH₄ et décroissante de CO₂).

Si, on augmente la puissance calorifique du mélange à brûler, correspondant à une puissance surfacique de 75 kW/m², et on diminue le débit d'air (10 m³/h), alors le fonctionnement du dispositif redevient possible : les températures mesurées sur la face amont de la paroi 3 sont de l'ordre de 650°C, et celles sur la face aval du diffuseur 11 de l'ordre de 780 °C. Mais dans ces nouvelles conditions, pour une puissance maximum, les températures mesurées à l'arrière de la paroi 3 sont proches de 900°C, et celles mesurées sur la face aval du diffuseur 11 de l'ordre de 1000°C. Au bout de quelques minutes, les qualités isolantes du diffuseur 11 en mousse céramique sont annihilées. Ainsi, la face amont du diffuseur 11 atteint des températures proches de celles de la face aval. Il en résulte une prise de feu dans le foyer de combustion 2. Un essai complémentaire avec un débit d'air supérieur à 10 m³/h n'a pas permis d'éviter la prise de feu.

Une même série d'essais a été réalisée sur le même dispositif, doté en plus de l'échangeur thermique 6 tel que précédemment défini, entre le diffuseur 11 et la paroi 6. L'échangeur 6 est disposé de manière à ne pas modifier l'interstice intercalaire 7. Dans l'intervalle borné par les niveaux minimum et maximum de puissance surfacique, le fonctionnement du dispositif est possible avec un débit d'air de 14 m³/h. Les valeurs des températures enregistrées sont rassemblées dans le tableau ci-dessous. Les températures au niveau de la paroi 3 sont suffisantes pour maintenir une activité catalytique totale. La face amont du diffuseur 11 est constamment maintenue à un faible niveau de température garantissant le bon fonctionnement de l'ensemble. Dans ce cas, l'échange thermique est très important, puisqu'il permet d'augmenter la température du flux du mélange à brûler de 750°C à puissance minimum, et de 950°C à puissance maximum. De plus, les températures mesurées en différents points de la surface aval de la paroi catalytique 3 se sont révélées quasi-identiques, garantissant ainsi une bonne répartition de l'émission du rayonnement infrarouge sur toute la surface d'émission. Un essai complémentaire où la température de l'air d'alimentation était portée à 200°C n'a pas conduit à une modification du comportement de l'appareil dans la plage de fonctionnement étudiée.

| | Face amont paroi 3 | Face amont échangeur 6 | Face aval échangeur 6 | Face amont diffuseur 11 |
|---|---|---|---|---|
| Puissance minimum | 650°C | 800°C | 45°C | 32°C |
| Puissance maximum | 905°C | 1030°C | 51 °C | 34°C |

## Revendications

1. Dispositif (1) d'émission surfacique d'un rayonnement infrarouge, comprenant un foyer de combustion (2) comportant une paroi (3) en matériau réfractaire, perméable selon son épaisseur, adaptée pour le passage d'un mélange à brûler (4) (gaz combustible (30) plus gaz comburant (31), par exemple air), de sa face amont (3a) à sa face aval (3b), et dont la surface développée interne est revêtue par une matière catalytique de combustion, et une chambre amont (5) alimentée d'un coté en mélange à brûler et fermée de l'autre côté par la paroi de combustion catalytique, ainsi qu'un diffuseur (11) du mélange à brûler, **caractérisé en ce que** ledit foyer de combustion (2) comprend au moins un échangeur thermique (6), disposé en amont et transversalement en vis-à-vis de la paroi (3) de combustion catalytique, en formant avec la paroi (3) de combustion catalytique un interstice (7) intercalaire, séparé par ledit échangeur du reste de la chambre amont (5), ledit échangeur thermique recevant par sa face aval (6b) au moins la majeure partie de la chaleur rayonnée par la face amont (3a) de ladite paroi de combustion catalytique, et ledit échangeur thermique en matériau réfractaire, étant également perméable selon son épaisseur et adapté pour le passage du mélange à brûler (4).

2. Dispositif selon la revendication 1, **caractérisé en ce que** ledit foyer de combustion (2) comprend une paroi (8) d'isolation thermique disposée en amont et en vis-à-vis de l'échangeur thermique (6), ladite paroi d'isolation thermique, en matériau réfractaire, étant également perméable selon son épaisseur et adaptée pour le passage du mélange à brûler (4).

3. Dispositif selon la revendication 2, **caractérisé en ce que** la paroi d'isolation thermique (8) est disposée transversalement dans la chambre amont (5), et détermine avec l'échangeur thermique (6) un interstice intermédiaire (9) séparé du reste de la chambre amont par ladite paroi d'isolation thermique.

4. Dispositif selon la revendication 1, **caractérisé en ce que** la paroi (3) de combustion catalytique est constituée par une galette de matériau céramique réfractaire, traversée de sa face amont (3a) à sa face aval (3b), selon le sens de passage du mélange (4) à brûler, par une multiplicité de canaux (10) parallèles, par exemple par une galette d'un matériau du type "nid d'abeille".

5. Dispositif selon la revendication 1, **caractérisé en ce que** l'échangeur thermique (6) est constitué par une galette de matériau céramique réfractaire, traversée de sa face amont (6a) à sa face aval (6b), selon le sens de passage du mélange (4) à brûler, par une multiplicité de canaux (10) parallèles, par exemple par une galette d'un matériau du type "nid d'abeille".

6. Dispositif selon la revendication 2, **caractérisé en ce que** l'échangeur thermique (6) est constitué par une galette de matériau céramique réfractaire, traversée de sa face amont à sa face aval, selon le sens de passage du mélange (4) à brûler, par une multiplicité de canaux (10) parallèles, par exemple par une galette d'un matériau du type "nid d'abeille".

7. Dispositif selon la revendication 3, **caractérisé en ce que** le diffuseur (11) du mélange à brûler est disposé transversalement dans l'interstice intermédiaire (9).

8. Dispositif selon la revendication 7, **caractérisé en ce que** le diffuseur (11) comprend une feuille perméable au mélange à brûler, en matériau réfractaire, par exemple céramique.

9. Dispositif selon la revendication 1, **caractérisé en ce que** la face aval (6b) de l'échangeur thermique (6) a pratiquement la même surface que la face aval (3b) rayonnante de la paroi (3) de combustion catalytique.

10. Dispositif selon la revendication 1, **caractérisé en ce que** le foyer (2) de combustion comprend une chambre (12) de distribution du mélange à brûler, en amont de la chambre amont (5), selon le sens de circulation du mélange à brûler (4), séparée de la chambre amont par une cloison (13) dans laquelle sont distribués une multiplicité de passages (15) de détente du mélange à brûler (4).

## Patentansprüche

1. Vorrichtung (1) zur Oberflächenemission von Infrarotstrahlung, mit einem Brennraum (2), der Folgendes aufweist, nämlich eine Wand (3) aus feuerfestem Material, die gemäß ihrer Dicke durchlässig ist, die für den Durchgang eines zu verbrennenden Gemischs (4) (brennbares Gas (30) plus die Verbrennung förderndes Gas (31), z.B. Luft) von ihrer stromaufwärtigen Seite (3a) zu ihrer stromabwärtigen Seite (3b) ausgelegt ist, und deren an der Innenseite ausgebildete Oberfläche mit einer für die Verbrennung katalytischen Substanz überzogen ist, und eine stromaufwärtige Kammer (5), die auf der einen Seite mit einem zu verbrennenden Gemisch gespeist wird und die auf der anderen Seite durch die Wand für die katalytische Verbrennung abgeschlossen ist, sowie einen Diffusor (11) für das zu verbrennende Gemisch, **dadurch gekennzeichnet dass**,
der Brennraum (2) zumindest ein Wärmetauscher (6) aufweist, der stromaufwärts und quer gegenüber der Wand (3) für die katalytische Verbrennung angeordnet ist, und mit dieser Wand (3) für die katalytische Verbrennung einen dazwischenliegenden Zwischenraum (7) bildet, der durch den Wärmetauscher vom Rest der stromaufwärtigen Kammer (5) abgetrennt ist, wobei der Wärmetauscher von seiner stromabwärtigen Seite (6b) zumindest den größeren Teil der von der stromaufwärtigen Seite (3a) der Wand für die katalytische Verbrennung abgestrahlten Wärme aufnimmt und wobei der Wärmetauscher aus feuerfestem Material ebenfalls gemäß seiner Dicke durchlässig und für den Durchgang des zu verbrennenden Gemischs (4) ausgelegt ist.

2. Vorrichtung nach Anspruch 1, **dadurch gekennzeichnet, dass** der Brennraum (2) eine Wärmeisolationswand (8) aufweist, die stromaufwärts und gegenüber dem Wärmetauscher (6) angeordnet ist, wobei die Wärmeisolationswand aus feuerfestem Material ebenfalls gemäß ihrer Dicke durchlässig und für den Durchgang des zu verbrennenden Gemischs (4) ausgelegt ist.

3. Vorrichtung nach Anspruch 2, **dadurch gekennzeichnet, dass** die Wärmeisolationswand (8) quer in der stromaufwärtigen Kammer (5) angeordnet ist und mit dem Wärmetauscher (6) einen mittleren zwischenraum (9) begrenzt, der durch die Wärmeisolationswand vom Rest der stromaufwärtigen Kammer getrennt ist.

4. Vorrichtung nach Anspruch 1, **dadurch gekennzeichnet, dass** die Wand (3) für die katalytische Verbrennung durch eine Platte aus feuerfestem keramischen Material, die in Richtung des Durchgangs des zu verbrennenden Gemischs (4) von ihrer stromaufwärtigen Seite (3a) zu ihrer stromabwärtigen Seite (3b) von einer Vielzahl von parallelen Kanälen (10) durchzogen ist, z.B. durch eine Platte aus einem Material vom Bienenwaben-Typ gebildet ist.

5. Vorrichtung nach Anspruch 1, **dadurch gekennzeichnet, dass** der Wärmetauscher (6) durch eine Platte aus keramischem feuerfestem Material, die in Richtung des Durchgangs des zu verbrennenden Gemischs (4) von ihrer stromaufwärtigen Seite (6a) zu ihrer stromabwärtigen Seite (6b) von einer Vielzahl von parallelen Kanälen (10) durchzogen ist, z.B. durch eine Platte aus einem Material vom Bienenwaben-Typ gebildet ist.

6. Vorrichtung nach Anspruch 2, **dadurch gekennzeichnet, dass** der Wärmetauscher (6) durch eine Platte aus keramischem feuerfestem Material, die in Richtung des Durchgangs des zu verbrennenden Gemischs (4) von ihrer stromaufwärtigen Seite (6a) zu ihrer stromabwärtigen Seite (6b) von einer Vielzahl von parallelen Kanälen (10) durchzogen ist, z.B. durch eine Platte aus einem Material vom Bienenwaben-Typ gebildet ist.

7. Vorrichtung nach Anspruch 3, **dadurch gekennzeichnet, dass** der Diffusor (11) für das zu verbrennende Gemisch quer im mittleren Zwischenraum (9) angeordnet ist.

8. Vorrichtung nach Anspruch 7, **dadurch gekennzeichnet, dass** der Diffusor (11) eine für das zu verbrennende Gemisch durchlässige Folie aus feuerfestem Material, z.B. Keramik, aufweist.

9. Vorrichtung nach Anspruch 1, **dadurch gekennzeichnet, dass** die stromabwärtige Seite (6b) des Wärmetauschers (6) praktisch die gleiche Oberfläche aufweist wie die stromabwärtige abstrahlende Seite (3b) der Wand (3) für die katalytische Verbrennung.

10. Vorrichtung nach Anspruch 1, **dadurch gekennzeichnet, dass** die Brennkammer (2) in Richtung der Zirkulation des zu verbrennenden Gemischs (4) stromaufwärts der stromaufwärtigen Kammer (5) eine Kammer (12) zur verteilung des zu verbrennenden Gemischs aufweist, die durch eine Trennwand (13) von der stromaufwärtigen Kammer abgetrennt ist, in der eine Vielzahl von Durchgängen (15) zum Entspannen des zu verbrennenden Gemischs (4) verteilt sind.

## Claims

1. Device (1) for the surface emission of infrared radiation, comprising a combustion chamber (2) having a wall (3) made of refractory material, permeable through its thickness, suitable for the passage of a mixture (4) to be burnt (combustible gas (30) plus oxidizer gas (31), for example air) from its upstream face (3a) to its downstream face (3b), and the internal developed surface of which is coated with a catalytic combustion material, and an upstream chamber (5) supplied on one side with the mixture to be burnt and closed on the other side by the catalytic combustion wall, as well as a diffuser (11) for the mixture to be burnt, **characterized in that** the said combustion chamber (2) includes at least one heat exchanger (6), placed upstream of and transversely with respect to the catalytic combustion wall (3), forming with the catalytic combustion wall (3) an intermediate gap (7), separated by the said exchanger from the rest of the upstream chamber (5), the said heat exchanger receiving via its downstream face (6b) at least most of the heat radiated by the upstream face (3a) of the said catalytic combustion wall, and the said heat exchanger made of refractory material also being permeable through its thickness and suitable for passage of the mixture (4) to be burnt.

2. Device according to Claim 1, **characterized in that** the said combustion chamber (2) includes a thermal insulation wall (8) placed upstream of and facing the heat exchanger (6), the said thermal insulation wall, made of refractory material, also being permeable through its thickness and suitable for passage of the mixture (4) to be burnt.

3. Device according to Claim 2, **characterized in that** the thermal insulation wall (8) is placed transversely in the upstream chamber (5) and with the heat exchanger (6) defines an intermediate gap (9) separated from the rest of the upstream chamber by the said thermal insulation wall.

4. Device according to Claim 1, **characterized in that** the catalytic combustion wall (3) consists of a disc of refractory ceramic material, through which a multiplicity of parallel channels (10) pass from its upstream face (3a) to its downstream face (3b), in the direction of flow of the mixture (4) to be burnt, for example a disc of a material of the "honeycomb" type.

5. Device according to Claim 1, **characterized in that** the heat exchanger (6) consists of a disc of refractory ceramic material, through which a multiplicity of parallel channels (10) pass from its upstream face (6a) to its downstream face (6b), in the direction of flow of the mixture (4) to be burnt, for example a disc of a material of the "honeycomb" type.

6. Device according to Claim 2, **characterized in that** the thermal insulation wall (8) consists of a disc of refractory ceramic material, through which a multiplicity of parallel channels (10) pass from its upstream face to its downstream face, in the direction of flow of the mixture (4) to be burnt, for example a disc of a material of the "honeycomb" type.

7. Device according to Claim 3, **characterized in that** the diffuser (11) for the mixture to be burnt is placed transversely in the intermediate gap (9).

8. Device according to Claim 7, **characterized in that** the diffuser (11) comprises a sheet permeable to the mixture to be burnt, made of refractory material, for example ceramic.

9. Device according to Claim 1, **characterized in that** the downstream face (6b) of the heat exchanger (6) has almost the same surface area as the radiating downstream face (3b) of the catalytic combustion wall (3).

10. Device according to Claim 1, **characterized in that** the combustion chamber (2) includes a chamber (12) for distributing the mixture to be burnt, upstream of the upstream chamber (5), in the direction of flow of the mixture (4) to be burnt, separated from the upstream chamber by a partition (13) in which a multiplicity of passages (15) for expansion of the mixture (4) to be burnt are distributed.
